## Europäisches Patentamt

## European Patent Office

(11) Veröffentlichungsnummer: **0 113 023**
**B1**

## Office européen des brevets

(12) **EUROPÄISCHE PATENTSCHRIFT**

(45) Veröffentlichungstag der Patentschrift:
23.07.86

(21) Anmeldenummer: 83111704.9

(22) Anmeldetag: 23.11.83

(51) Int. Cl.⁴: **C 01 B 21/14, C 01 B 21/22,**
**B 01 D 53/34**

(54) Verfahren zur Entfernung von Distickstoffoxid aus Wasserstoff, Stickstoffmonoxid und Distickstoffoxid enthaltenden Gasen.

(30) Priorität: 01.12.82 DE 3244370

(43) Veröffentlichungstag der Anmeldung:
11.07.84 Patentblatt 84/28

(45) Bekanntmachung des Hinweises auf die Patenterteilung:
23.07.86 Patentblatt 86/30

(84) Benannte Vertragsstaaten:
BE CH DE GB IT LI NL

(56) Entgegenhaltungen:
EP-A-0 006 479
EP-A-0 059 445
DE-A-2 341 744
DE-A-2 829 703
DE-C-1 177 118
FR-A-1 596 425
US-A-2 853 365

(73) Patentinhaber: BASF Aktiengesellschaft, Carl-Bosch- Strasse 38, D-6700 Ludwigshafen (DE)

(72) Erfinder: Van Deyck, Frans, Nolsebaan 69, B-2190 Essen (BE)
Erfinder: Weiss, Franz- Josef, Dr., Schilfweg 1, D-6706 Neuhofen (DE)
Erfinder: Verberckt, Roger, Jef Denijnstraat 10, B-2621 Schelle (BE)
Erfinder: Thomas, Erwin, Borngasse 12, D-6713 Freinsheim (DE)
Erfinder: Mangelschots, Benedikt, Pervijzestraat 29, D-2600 Berchem (BE)
Erfinder: Pijl, Paul, Chemie- Ing., Koninglaan 32, B-2180 Kalmthout (BE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Bei der Herstellung von Hydroxylammoniumsalzen durch katalytische Hydrierung von Stickstoffmonoxid mit Wasserstoff, ensteht als Nebenprodukt u.a. Distickstoffoxid. Da der Umsatz nicht quantitativ ist, erhält man somit Abgase, die Wasserstoff, Stickstoffmonoxid und Distickstoffoxid und Inerte enthalten. Solche Gase sind insbesondere unter erhöhtem Druck explosiv. Da die Abgase jedoch wertvolle Ausgangsstoffe enthalten, besteht Bedarf, diese wieder zu verwenden. Aus der-EP-Anmeldung 008479 ist schon bekannt, daß man Hydroxylammoniumsalze durch katalytische Reduktion von Stickstoffmonoxid mit Wasserstoff in zwei getrennten, hintereinander geschalteten Reaktionszonen durchführt, wobei man von sehr reinen Ausgangsgasen ausgeht. Die Verwendung von reinen Ausgangsgasen ist jedoch technisch sehr aufwendig. Abgesehen davon wird kein Hinweis gegeben, wie die Abgase gefahrlos wieder verwendet werden können. Ferner ist aus der EP-Anmeldung bekannt, daß man dem verwendeten Gemisch aus Stickstoffmonoxid und Wasserstoff 10 bis 80 Vol% Inertgase zusetzt, um im Abgas kein explosives Gemisch zu erhalten. Die Mitverwendung von Inertgasen erschwert jedoch die Wiederverwendung solcher Abgase. Ein Hinweis, wie hierbei zu verfahren ist, wird nicht gegeben.

Es war deshalb die technische Aufgabe gestellt, Wasserstoff, Stickstoffmonoxid und Distickstoffoxid enthaltende Gase so zu behandeln, daß sie gefahrlos wieder verwendet werden können.

Diese Aufgabe wird gelöst in einem Verfahren zur Entfernung von Distickstoffoxid aus Wasserstoff, Stickstoffmonoxid und Distickstoffoxid enthaltenden Gasen, wobei man die zu behandelnden Gase mit Molekularsieben mit einer Porengröße von 4 bis $10.10^{-10}$m (4 bis 10 Å) behandelt.

Das neue Verfahren hat den Vorteil, daß aus Wasserstoff, Stickstoffmonoxid und Distickstoffoxid enthaltenden Gasen, Distickstoffoxid auf einfache Weise entfernt wird. Ferner hat das neue Verfahren den Vorteil, daß die so gereinigten Gase ohne Gefahr bei der Hydroxylaminsynthese, insbesondere unter erhöhtem Druck, wieder verwendet werden können.

Die zu behandelnden Gase enthalten in der Regel 50 bis 85 Vol% Wasserstoff, 5 bis 15 Vol% Stickstoffmonoxid, 3 bis 15 Vol% Distickstoffoxid und in Abhängigkeit von der Reinheit des verwendeten Stickstoffmonoxids und Wasserstoffs 7 bis 20 Vol% Inertgase, z.B. Stickstoff. Ein typisches Gemisch enthält beispielsweise 50 bis 75 Vol% Wasserstoff, 5 bis 15 Vol% Stickstoffmonoxid und 7 bis 15 Vol% Distickstoffoxid und 13 bis 20 Vol% Inerte.

Solche Gase erhält man beispielsweise bei der Herstellung von Hydroxylammoniumsalzen durch katalytische Reduktion von Stickstoffmonoxid mit Wasserstoff. Die Umsetzung wird bei 30 bis 60°C unter Mitverwendung von starken Mineralsäuren, insbesondere Schwefelsäure und/oder Ammoniumbisulfat durchgeführt. In der Regel geht man von 4 bis 6 normalen wäßrigen Säuren aus. Als.Katalysatoren verwendet man suspendierte Edelmetallkatalysatoren, insbesondere Platin-Träger-Katalysatoren. Ein geeignetes Verfahren wird beispielsweise beschrieben in der DE-PS 11 77 118.

Die Distickstoffoxid enthaltenden Gase behandelt man erfindungsgemäß mit Molekularsieben z.B. indem man sie durch eine Schicht aus Molekularsieben leitet. Bevorzugte Molekularsiebe sind A-, X- oder Y-Zeolithe, sowie natürliche Zeolithe, vorzugsweise solche vom Typ Mordenit, Faujasit oder Chabazit, besonders bevorzugt wird X-Zeolith.

Die verwendeten Molekularsiebe haben eine Porengröße von 4 bis $10.10^{-10}$m (4 bis 10 Å), insbesondere von 5 bis $9.10^{-10}$ (5 bis 9 Å).

Vorteilhaft entfernt man vor der Behandlung mit Molekularsieben aus dem zu behandelnden Distickstoffoxid enthaltenden Gas das darin enthaltene Wasser, z.B. durch Kondensieren des Wassers bei einer Temperatur von 2 bis 40°C oder durch Behandeln mit konzentrierter Schwefelsäure oder Silicagel. Die Adsorption von Distickstoffoxid an den Molekularsieben führt man dann vorzugsweise bei einer Temperatur von -88 bis 60°C, insbesondere -35 bis 50°C durch. Hierbei hält man vorzugsweise einen Druck von 1 bis 51 bar absolut, insbesondere 1 bis 25 bar abs. ein. Sobald die Adsorptionsfähigkeit der Molekularsiebe erschöpft ist, werden diese regeneriert, z.B. durch Behandeln bei Temperaturen von 0 bis 300°C, unter vermindertem Druck, vorteilhaft 0,02 bis 0,4 bar absolut und/oder durch Behandeln mit inerten oder oxidierenden Gasen, wie Stickstoff oder Luft. Um die Bildung von explosiven Gasgemischen zu vermeiden, ist es zweckmäßig, vor der Desorption unter dem bei der Adsorption angewandten Druck mit Stickstoff zu spülen.

Vorteilhaft wendet man mindestens 2, mit Molekularsieben beschickte Zonen, z.B. 4 Zonen, an. In der Regel werden die Zonen in Reihe geschaltet. Vorteilhaft wird in einem Teil der angewandten Zonen adsorbiert und im restlichen Teil der Zonen regeneriert, z.B. jeweils in der Hälfte der Zonen abwechselnd adsorbiert und regeneriert.

Die so behandelten Gase haben einen Gehalt < 1 Vol% z.B. von 0,1 bis < 1,0 Vol% an Distickstoffoxid und können nach Einstellung des Verhältnisses von Wasserstoff: Stickstoffmonoxid wieder für die Hydroxylaminsynthese verwendet werden. Das abgetrennte $N_2O$ eignet sich gegebenenfalls nach Reinigung als Treibgas z.B. für Sprühdosen.

Das Verfahren nach der Erfindung sei an folgenden Beispielen veranschaulicht.

**Beispiel 1**

In einem Glasgefäß mit einem Durchmesser von 60 mn und 500 mm Höhe, gefüllt mit 0,6 kg Molekularsieb Typ 13X ($10.10^{-10}$m (10 Å) wurden 1,6 Stunden lang 100 l/Std. eines über Silikagel getrockneten Abgases bestehend aus 55,1 Vol% $H_2$, 6,8 Vol% NO, 11,5 Vol% $N_2O$, 26,6 Vol% Inertgas bei einem Druck von 1,04 bar absolut und einer Temperatur von 20°C, von unten eingeleitet. Das oben austretende Gas hatte folgende Zusammensetzung: 62,25 Vol% $H_2$, 7,7 Vol% NO, 0,05 Vol% $N_2O$ und 30,0 Vol% Inertgas. Die Beladung des Molekularsiebes betrug demnach 4,52 g $N_2O$/100 g Molekularsieb. Danach wurde das Molekularsieb mit 100 l/Std. Inertgas, im Gegenstrom zur Beladungsrichtung, 4 Stunden bei einem Druck von 1,04 bar und 20°C regeneriert, bis der $N_2O$-Gehalt im Regeneriergas auf 0,05 Vol% abgefallen war.

**Beispiel 2**

In der Apparatur wie in Beispiel 1, gefüllt mit 0,8 kg Molekularsieb, Typ A ($5.10^{-1}$ M) (5 Å) wurden 1,2 Stunden lang 200 l/Std. eines über Aluminiumoxid-Gel getrockneten Abgases, bestehend aus 65 Vol% $H_2$, 10 Vol% NO, 12,3 Vol% $N_2O$, 12,7 Vol% Inertgas, bei einem Druck von 1,04 bar absolut und einer Temperatur von 31°C, von unten eingeleitet. Das oben austretende Gas enthielt 0,05 Vol% $N_2O$. Die Beladung des Molekularsiebes betrug 7,37 g $N_2O$/100 g Molekularsieb. Die Regenerierung erfolgte wie in Beispiel 1.

**Beispiel 3**

In der Apparatur wie in Beispiel 1, gefüllt mit Molekularsieb TypX ($9.10^{-10}$m (9 Å) wurde der gleiche Reinigungseffekt und eine Beladung von 3,62 g $N_2O$/100 g Molsieb, bei einer Gasbelastung des Adsorbers von 300 l/h, bei 20°C und 1,04 bar absolut erhalten.

**Beispiel 4**

In einem Edelstahlgefäß mit einem Durchmesser von 100 mm und einer nutzbaren Höhe von 480 mm, gefüllt mit 2,85 kg Molekularsieb Typ 13X ($10.10^{-10}$m (10 Å) wurden 40 Minuten lang 500 l/h (unter Betriebsbedingungen) eines Abgases, bestehend aus 55 Vol% $H_2$, 10,5 Vol% NO, 14 Vol% $N_2O$, 1,1 Vol% $H_2O$ (Taupunkt: 14°C) und 19,4 Vol% Inertgase, bei einem Druck von 1,36 bar absolut und einer Temperatur von 21°C, von unten eingeleitet. Vorher wurde die Molekularsiebmenge 67 Stunden bei 215°C getrocknet und danach mit 1856 l Stickstoff von 1,0 bar absolut auf 20°C abgekühlt.

Das oben aus dem Adsorber austretende Gas hatte folgende Zusammensetzung: 65 Vol% $H_2$, 12 Vol% NO, 0 Vol% $N_2O$, 0 Vol% $H_2O$ (Taupunkt: -29°C), 23 Vol% Inertgase. Während der Adsorption stieg die Temperatur des Molsiebes bis auf 41°C an. Die Beladung des molekularsiebes bis zum $N_2O$-Durchbruch mit 0,2 Vol% $N_2O$ im Austrittsgas, betrug demnach 4,4 g $N_2O$/100 g Molsieb. Nach dem Durchbruch wurde das Molsieb 55 Minuten lang weiter beladen, bis das oben austretende Gas folgende Zusammensetzung hatte: 57 Vol% $H_2$, 11 Vol% NO, 12 Vol% $N_2O$, 0 Vol% $H_2O$ (Taupunkt: -27,5°C), 20 Vol% Inertgase. Danach wurde das molekularsieb, im Gegenstrom zur beladungsrichtung, innerhalb 12 Minuten mit 31 l Stickstoff gespült bis das Gas $H_2$- und NO-frei war und dann bei einem Vakuum von 0,08 bar absolut (Enddruck) und Spülung mit 807 l Stickstoff von 21°C während 10,4 Stunden, regeneriert. Der $N_2O$-Gehalt im Regeneriergas war danach auf 0,5 Vol% $N_2O$ abgefallen. Nach dieser Regenerierung wurde das gleiche Molekularsieb neu beladen. Es wurden 30 Minuten lang 600 l/h (unter Betriebsbedingungen) eines Abgases, bestehend aus 54 Vol% $H_2$, 14 Vol% NO, 14,5 Vol% $N_2O$, 1,2 Vol% $H_2O$ (Taupunkt: 15°C) und 16,3 Vol% Inertgase bei einem Druck von 1,35 bar absolut und einer Temperatur von 22,5°C, von unten eingeleitet. Das oben austretende Gas hatte folgende Zusammensetzung: 64 Vol% $H_2$, 17 Vol% NO, 0 Vol% $N_2O$, 0 Vol% $H_2O$ (Taupunkt: -26°C), 19 Vol% Inertgase. Während der Adsorption stieg die Temperatur des Molsiebes auf 42°C an. Die Beladung des Molekularsiebes bis zum $N_2O$-Durchbruch mit 0,2 Vol% $N_2O$ im Austrittsgas betrug demnach 4,1 g $N_2O$/100 g Molekularsieb.

**Beispiel 5**

Zur Prüfung der Adsorptionskapazität des Molekularsiebs nach mehreren Beladungen, wurde die Apparatur wie in Beispiel 4 vorgestellt, gefüllt mit 2,85 kg Molekularsieb Typ 13X ($10.10^{-10}$m) (10 Å), nach einem bestimmten Adsorptions-Regenerationszyklus gefahren. Das Molekularsieb wurde nicht bis zum Durchbruch beladen. Abgas mit leicht wechselnder Zusammensetzung, wie auf Seite 2 erwähnt, mit einem durchschnittlichen $N_2O$-Gehalt von 14 Vol% und einem Wassergehalt von 1 bis 1,5 Vol% wurde verwendet. Zwölf Zyklen wurden gefahren, jeder bestehend aus 15 Minuten Adsorptionszeit bei 1,32 bar absolut und 20°C, jeweils gefolgt von einer 5-minütigen $N_2$-Spülung (250 l/h) bei 1,4 bar absolut und 20°C, zur Entfernung von $H_2$ und NO und nachher einer 40-minü-tigen Desorption unter Vakuum bei 0,05 bar absolut und 20°C, unter Zuführung von $N_2$ (5 l/h) für die 9 ersten Zyklen und ohne $N_2$-Zuführung für die 3 letzten Zyklen, während des Desorptionsvorganges. Die $N_2O$-Entfernung fernung aus dem Abgas war immer vollständig. Bei jedem Adsorptionsvorgang wurden ca. 40 g N$_2$O adsorbiert (ca. 1,4 g N$_2$O/100 g Molekularsieb).

**Patentansprüche**

1. Verfahren zur Entfernung von Distickstoffoxid aus Wasserstoff, Stickstoffmonoxid und Distickstoffoxid enthaltenden Gasen, <u>dadurch gekennzeinet</u>, daß man die zu behandelnden Gase mit Molekularisieben mit einer Porengröße von 4 bis 10.10$^{-10}$m (4 bis 10 Å) behandelt.

2. Verfahren nach Anspruch 1, <u>dadurch gekennzeichnet</u>, daß man als Molekularsiebe A-, X- oder Y-Zeolithe verwendet.

3. Verfahren nach den Ansprüchen 1 und 2, <u>dadurch gekennzeichnet</u>, daß man vor der Behandlung aus den Distickstoffoxid enthaltenden Gasen Wasser entfernt.

4. Verfahren nach den Ansprüchen 1 bis 3, <u>dadurch gekennzeichnet</u>, daß man die Behandlung mit Molekularsieben bei einer Temperatur von -35 bis 50°C durchführt.

5. Verfahren nach den Ansprüchen 1 bis 4, <u>dadurch gekennzeichnet</u>, daß man die Behandlung mit Molekularsieben unter einem Druck von 1 bis 51 bar absolut durchführt.

6. Verfahren nach den Anprüchen 1 bis 5, <u>dadurch gekennzeichnet</u>, daß man die Molekularsiebe unter vermindertem Druck und/oder durch Behandeln mit inerten oder oxidierenden Gasen regeneriert.

7. Verfahren nach den Ansprüchen 1 bis 6 <u>dadurch gekennzeichnet</u>, daß man die Regeneration bei einer Temperatur von 0 bis 300°C durchführt.

8. Verfahren nach den Ansprüchen 1 bis 7, <u>dadurch gekennzeichnet</u>, daß man die Behandlung in mindestens 2 Zonen durchführt, wobei abwechselnd adsorbiert und regeneriert wird.

9. Verfahren nach den Ansprüchen 1 bis 8, <u>dadurch gekennzeichnet</u>, daß man Abgase, die bei der Herstellung von Hydroxylammoniumsalzen durch katalytische Reduktion von Stickstoffmonoxid mit Wasserstoff, in Gegenwart von starken wäßrigen Mineralsäuren anfallen, verwendet.

10. Verfahren nach den Anspruchen 1 bis 9, <u>dadurch gekennzeichnet</u>, daß man die behandelten Gase für die Herstellung von Hydroxylammoniumsalzen verwendet.

**Claims**

1. A process for removing nitrous oxide from a gas containing hydrogen, nitric oxide and nitrous oxide, wherein the gas to be treated is treated with a molecular sieve having a pore size of from 4 to 10.10$^{-10}$m (4 to 10 Å).

2. A process as claimed in claim 1, wherein the molecular sieve used is an A, X or Y zeolite.

3. A process as claimed in claims 1 and 2, wherein, before the treatment, water is removed from the gas containing nitrous oxide.

4. A process as claimed in claims 1 to 3, wherein the treatment with the molecular sieve is carried out at from -35 to 50°C.

5. A process as claimed in claims 1 to 4, wherein the treatment with the molecular sieve is carried out under an absolute pressure of from 1 to 51 bar.

6. A process as claimed in claims 1 to 5, wherein the molecular sieve is regenerated under reduced pressure and/or by treatment with an inert or oxidizing gas.

7. A process as claimed in claims 1 to 6, wherein the regeneration is carried out at from 0 to 300°C.

8. A process as claimed in claims 1 to 7, wherein the treatment is effected in at least 2 zones, adsorption and regeneration being carried out alternately.

9. A process as claimed in claims 1 to 8, wherein the offgas hydroxylammonium salts by catalytic reduction of nitric oxide with hydrogen in the presence of a strong aqueous mineral acid.

10. A process as claimed in claims 1 to 9, wherein the treated gas is used for the preparation of hydroxylammonium salts.

**Revendications**

1. Procédé pour extraire l'oxyde azoteux de mélanges gazeux contenant de l'hydrogène, de l'oxyde azotique et de l'oxyde azoteux, caractérisé en ce que l'on soumet les mélanges gazeux à un traitement sur des tamis moléculaires avec des pores d'une dimension comprise entre 4 et 10.10$^{-10}$ m (4 à 10 Å).

2. Procédé suivant la revendication 1, caractérisé en ce que les tamis moléculaires sont choisis parmi les zéolithes A, X et Y.

3. Procédé suivant les revendications 1 et 2, caractérisé en ce que le traitement des mélanges gazeux contenant de l'oxyde azoteux est précédé de l'élimination de l'eau.

4. Procédé suivant les revendications 1 à 3, caractérisé en ce que le traitement sur les tamis moléculaires est réalisé à une température comprise entre -35 et 50°C.

5. Procédé suivant les revendications 1 à 4, caractérisé en ce que le traitement sur les tamis moléculaires est réalisé sous une pression absolue comprise entre 1 et 51 bars.

6. Procédé suivant les revendications 1 à 5, caractérisé en ce que les tamis moléculaires sont régénérés sous pression réduite et(ou) par un traitement avec un gaz inerte ou oxydant.

7. Procédé suivant les revendications 1 à 6, caractérisé en ce que la régénération est effectuée à une température comprise entre 0 et 300°C.

8. Procédé suivant les revendications 1 à 7, caractérisé en ce que le traitement est réalisé dans au moins deux zones, dans lesquelles on alterne l'adsorption et la régénération.

9. Procédé suivant les revendications 1 à 8, caractérisé en ce que l'on emploie des gaz résiduaires provenant de la préparation de sels d'hydroxyl-ammonium par réduction catalysée de l'oxyde azotique par l'hydrogène en présence d'acides minéraux forts aqueux.

10. Procédé suivant les revendications 1 à 9, caractérisé en ce que les mélanges gazeux traités sont utilisés pour la préparation de sels d'hydroxyl-ammonium.